# EUROPÄISCHE PATENTANMELDUNG

(11) **EP 2 058 995 A1**
(43) Veröffentlichungstag der Anmeldung: **13.05.2009**
(21) Anmeldenummer: 08168495.3
(22) Anmeldetag: 06.11.2008
(51) Int. Cl.: H04L 29/06, H04L 29/08

(54) **Kommunikationsnetzwerk einer Druckmaschinensteuerung**

(30) Priorität: 10.11.2007 DE 102007053691
(71) Anmelder: manroland AG, 63075 Offenbach/Main (DE)
(72) Erfinder: Nemeyer, Peter, 86420, Diedorf (DE); Platzer, Peter, 86911, Dießen (DE)

(57) **Zusammenfassung**

In einem Kommunikationsnetzwerk einer Druckmaschinensteuerung mit einer Vielzahl von Netzwerk-Infrastrukturkomponenten und einer Vielzahl von als Teilnehmer angeschlossenen Steuereinheiten, die jeweils Maschineneinheiten der Druckmaschine zugeordnet sind und diese steuern, ist mindestens ein Teilbereich (3) des Kommunikationsnetzwerks mit dem übrigen Teil (2) des Kommunikationsnetzwerks durch eine Filtereinheit (1) verbunden. Die Filtereinheit lässt von den bei ihr eintreffenden Datenpaketen nur solche passieren, welche in einem Adresssegment einen Abschnitt aufweisen, der mit einem Element einer vorbestimmten, in einem Speicher des Filters gespeicherten Menge von zulässigen Adressen übereinstimmt, und verwirft alle anderen eintreffenden Datenpakete. Die in dem Filter gespeicherten Adressen sind Portnummern, durch welche gemäß dem zum Betrieb des Kommunikationsnetzwerks eingesetzten Netzwerkprotokoll Datenpakete auf den Teilnehmen laufenden Prozessen zugeordnet werden. Unter den gespeicherten Portnummern sind keine bekannten Nummern von außerhalb der Druckmaschinensteuerung vorkommenden Standardprozessen.

## Beschreibung

Die Erfindung betrifft ein Kommunikationsnetzwerk einer Druckmaschinensteuerung nach dem Oberbegriff des Anspruchs 1.

Nach dem Stand der Technik werden Computernetzwerke zur Steuerung einer Druckmaschine heute in Ethernet-Technologie realisiert. Für verschiedene Aufgaben und Anforderungen wird ein solches Ethernet-Netzwerk in verschiedene Bereiche eingeteilt. Unabhängig von der Aufgabe der einzelnen Netzwerkteilnehmer werden diese immer direkt an Netzwerk-Infrastrukturkomponenten (Verkabelung, Switch, Hub, Router, Repeater, usw.) angeschlossen. Die einzelnen Teilbereiche werden, soweit erforderlich, über Router miteinander verbunden. Dieser Aufbau ermöglicht gemäß der logischen und physikalischen Topologie, unabhängig aber von den Informationsinhalten der übertragenen Nachrichten, eine beliebige Kommunikation aller Netzwerkteilnehmer untereinander.

Aufgrund der mittlerweile stark ansteigenden Zahl an Netzwerkteilnehmern im Umfeld einer Druckmaschine, wächst die Zahl möglicher Komplikationen. Da viele Netzwerkteilnehmer in zunehmendem Maß auf Entwicklungen und Betriebssystemen basieren, deren Projektierung weder vom Hersteller der Druckmaschine selbst ausgeführt wird, noch unter seiner Kontrolle steht, wird das korrekte Zusammenspiel der Teilnehmer immer schwieriger. Eine Fehlersuche bei Störfällen an den Anlagen wird auf fatale Weise erschwert. Dies führt zu einem hohen Kostenrisiko und gefährdet die Produktionssicherheit.

Eine weitere Schwierigkeit stellt bei Druckmaschinen die starke Abhängigkeit der Gesamtfunktion einer Anlage von einem zeitlich genau definierten Zeitrahmen (Echtzeitanforderungen) für einzelne Steuerungsnachrichten dar. Da die am Markt verfügbaren Netzwerk-Infrastrukturkomponenten in ihrer Weiterleitungsfunktion keine unter vertretbarem Aufwand effektiv nutzbare Unterscheidung einzelner Datenpakete nach ihrer Bedeutung bieten, kann es zu einer Überlastung des Netzwerks kommen. Die Folge ist ein Verlust essentieller Informationen, da Absicherungsmechanismen, wie sie in der Office-Welt verwendet werden, vielfach nicht wirksam sind. Bei Steuerungsnachrichten führt ein Informationsverlust an der Anlage direkt in Not- oder Abbruchsszenarien. Somit ist eine Überlastung der Netzwerkinfrastruktur, wenn auch nur von kurzer Dauer, unter allen Umständen zu vermeiden.

Des Weiteren besitzen die meisten Netzwerkteilnehmer konstruktionsbedingt ungewollte, d.h. für die Anwendung zur Steuerung einer Druckmaschine unnötige Kommunikationsmerkmale oder Dienste, die im Zusammenspiel die Anlagenfunktion sporadisch oder dauerhaft stören können.

Schließlich verfügen viele Netzwerkteilnehmer im Umfeld einer Druckmaschine aufgrund Ihrer alleinigen Ausrichtung auf ihre jeweilige Funktion üblicherweise über wenig bis keine Sicherheitsfunktionen bezüglich der Wartungs- und Bedienzugangsmöglichkeiten. Auch verfügen solche Systeme nur sehr selten über Schutzmechanismen gegen ungewollten Fernzugang und gegen Angriffe jeglicher Art. Zudem sind die aus Office-Netzwerken bekannten Hilfsmittel wie Virenscanner, Sicherheits-Updates oder Protokollier-Systeme nicht oder kaum verfügbar.

Es besteht daher die Aufgabe, ein Kommunikationsnetzwerk einer Druckmaschinensteuerung zu schaffen, welches die vorausgehend aufgezeigten Nachteile des Standes der Technik überwindet.

Diese Aufgabe wird erfindungsgemäß durch ein Kommunikationsnetzwerk mit den Merkmalen des Anspruchs 1 gelöst. Vorteilhafte Ausgestaltungen sind in den Unteransprüchen angegeben.

Erfindungsgemäß besteht ein Kommunikationsnetzwerk einer Druckmaschinensteuerung aus mehreren Teilen, die durch Filtereinheiten, nachfolgend kurz Filter genannt, miteinander verbunden sind. Ein solches Filter erlaubt nur Datenpaketen mit einem vorbestimmten Inhalt eines Abschnitts des Adresssegmentes die Passage. Alle anderen eintreffenden Datenpakete werden verworfen. Aufgrund des Protokolls, auf dessen Basis die Netzwerkteilnehmer miteinander kommunizieren, ist anhand besagten Adressabschnitts erkennbar, ob ein Datenpaket zur Steuerung der Druckmaschine benötigte Information, nachfolgend Nutzinformation genannt, enthält, oder ob sein Inhalt für die Funktion der Druckmaschine unnötig oder möglicherweise sogar schädlich ist. Hierzu schreibt das Protokoll für Nutzinformation die Verwendung einer Adresse aus einer begrenzten Menge von Adressen in einem bestimmten Abschnitt des Adresssegmentes eines Datenpakets vor.

Es erfolgt eine Einteilung der Kommunikationsarten in verschiedene Portnummernbereiche, wobei gemäß dem zum Betrieb des Kommunikationsnetzwerks eingesetzten Netzwerkprotokoll durch eine Portnummer ein Datenpaket einem bestimmten auf einem oder mehreren Teilnehmen laufenden Prozess zugeordnet wird. Für sämtliche Nutzkommunikation ist ein bestimmter Portnummernbereich reserviert. Alle Netzwerkteilnehmer müssen Daten mittels eines einheitlichen Kommunikationsprotokolls austauschen, welches für die Nutzkommunikation nur den reservierten Portnummernbereich benutzt. Zu diesem Portnummernbereich gehören keine bekannten Portnummern von außerhalb der Druckmaschinensteuerung vorkommenden Standardprozessen, d.h. keine sogenannten "well-known ports". Die unternehmenseigenen Systeme des Druckmaschinenherstellers und die Systeme von Zulieferpartnern sind in Funktion und Kommunikation ausnahmslos auf die Benutzung dieses nur einen reservierten Portnummernbereich benutzenden Protokolls abgestimmt.

Mittels eines Systems von Filtern werden alle kritischen Netzwerkteilnehmer, d.h. solche, deren eigenes Kommunikationsverhalten nicht vollständig der Kontrolle durch den Hersteller der Druckmaschine unterliegt, effektiv abgeschirmt. Das Filtersystem erlaubt, einstellbar über Tabellen für jede Kommunikationsrichtung, die Passage von Datenpaketen aus dem Portnummernbereich der Nutzkommunikation und blockiert alle anderen Datenpakete, d.h. die Schad- bzw. Ballastkommunikation.

Um die Fernwartbarkeit einzelner Komponenten hinter einem erfindungsgemäßen Filter weiterhin zu gewährleisten, können die Portnummern zugelassener Fernwartungsapplikationen in Richtung der hinter einem Filter liegenden kritischen Netzwerkteilnehmer mittels des entsprechenden Regelwerkes hindurchgelassen werden. Durch ein übergeordnetes einheitliches Fernwartungssystem kann dem Kunden auf diese Art und Weise eine sichere Fernwartung für alle Komponenten bereits vom Hersteller angeboten werden. Zusätzlich bietet das erfindungsgemäße Filter die nötige Sicherheit und damit die Freiheit für individuelle zulieferereigene oder kundeneigene Fernwartungslösungen.

Alternativ zur Öffnung eines Filters für zusätzliche Portnummern in einer Richtung können in einem Filter auch mehrere Speicherbereiche für verschiedene Mengen von Adressen vorgesehen sein, und das Filter kann für eine Umschaltung zwischen verschiedenen Betriebsarten, denen die verschiedenen Mengen von Adressen zugeordnet sind, ausgelegt sein. In diesem Fall kann beispielsweise eine Betriebsart für den Produktionsbetrieb einer Druckmaschine vorgesehen sein, in dem nur der Austausch essentieller Nutzinformation zugelassen werden darf. Eine andere Betriebsart kann für die Fernwartung vorgesehen sein, für die dann während einer Stillstandszeit der Druckmaschine durch eine Betriebsartenumschaltung zusätzliche Portnummern freigeschaltet werden. Eine Störung des Produktionsbetriebs durch Wartungsarbeiten ist somit ausgeschlossen, da die entsprechenden Portnummern während des Produktionsbetriebs durch das Filtersystem blockiert werden.

Die bisherige Ausgangslage bzgl. der Daten- und Funktionssicherheit an einer Druckmaschine wird durch die Erfindung maßgeblich verbessert. Schad- und Ballastkommunikation werden komplett unterbunden. Potentielle Schwachstellen und Design-Fehler innerhalb aktueller Geräte können sich anders als bisher nicht mehr auf die komplette Anlage auswirken. Netzwerksicherheit kann auf diese Weise auch in der Steuerung einer modernen Druckmaschine gewährleistet werden.

Nachfolgend wird ein Ausführungsbeispiel der Erfindung anhand der Zeichnungen beschrieben. In diesen zeigt
- Fig.1: einen schematischen Ausschnitt eines erfindungsgemäßen Kommunikationsnetzwerks und
- Fig. 2: die Funktionsweise eines erfindungsgemäßen Filters als Ablaufdiagramm.

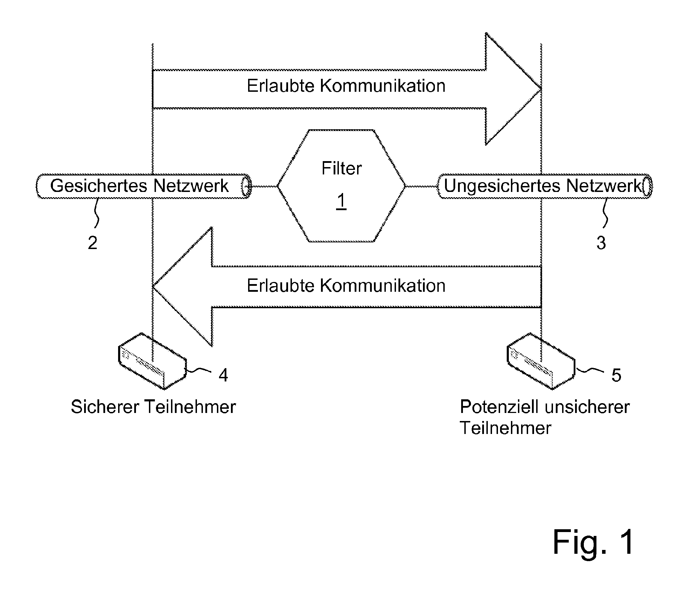

Wie Fig. 1 erkennen lässt, verbindet eine Filtereinheit 1 zwei Teile eines Kommunikationsnetzwerks einer Druckmaschinensteuerung, nämlich einen gesicherten Netzwerkteil 2 und einen ungesicherten Netzwerkteil 3 miteinander. An dem gesicherten Netzwerkteil 2 sind ausschließlich sichere Teilnehmer 4 angeschlossen, d.h. Teilnehmer, die mit Sicherheit nur solche Daten, die für die Steuerung der Druckmaschine notwendig, zumindest aber nicht störend oder schädlich sind, an das gesamte Netzwerk 1-3 absetzen können. An dem ungesicherten Netzwerkteil 2 sind auch potenziell unsichere Teilnehmer 4 angeschlossen, d.h. Teilnehmer, die unter Umständen auch solche Daten, die für die Steuerung der Druckmaschine überflüssig und möglicherweise sogar störend oder schädlich sind, an das gesamte Netzwerk 1-3 absetzen können.

Die potenziell unsicheren Teilnehmer 5 werden jedoch auch für die Steuerung der Druckmaschine benötigt und senden auch Nutzinformation über das Netzwerk 1-3 an andere Teilnehmer. Das Filter 1 ermöglicht den Fluss von Nutzinformation zwischen dem gesicherten Netzwerkteil 2 und dem ungesicherten Netzwerkteil 3 in beiden Richtungen, wie es in Fig. 1 durch die beiden Pfeile angedeutet ist.

Nutzinformation ist für das Filter 1 anhand der im jeweiligen Adresssegment der von den Teilnehmern 4, 5 gesendeten Datenpakete enthaltenen Portnummern erkennbar. Eine begrenzte Anzahl vordefinierter Portnummern ist für Datenpakete mit Nutzinformation reserviert. Nur Datenpakete mit solchen Portnummern werden von dem Filter 1 weitergeleitet. Alle anderen Portnummern führen zur Identifikation eines Datenpaketes als Teil einer Ballast- bzw. Schadkommunikation und zur Verwerfung des Datenpaketes.

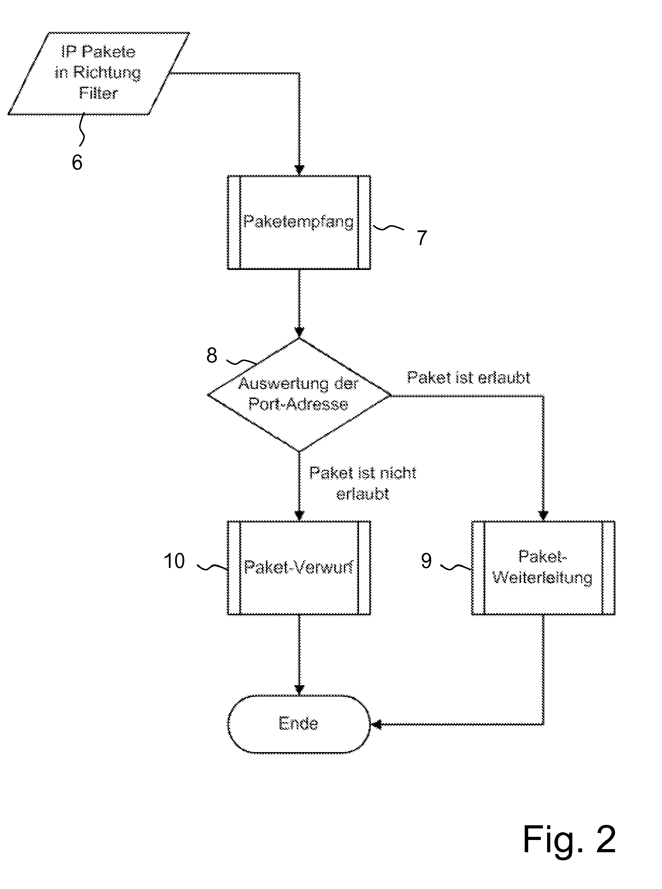

Dies wird in Fig. 2 in Form eines Ablaufdiagramms verdeutlicht. Ein an dem Filter ankommendes, dem Internet-Protokoll (IP) entsprechendes Datenpaket 6 wird in Schritt 7 von dem Filter 1 empfangen und gepuffert. In Schritt 8 wird die in dem Paket 6 enthaltene Portnummer ausgewertet, d.h. mit einer in dem Filter 1 in einer Tabelle gespeicherten Liste zulässiger Portnummern verglichen. Erweist sich das Paket anhand seiner Portnummer als erlaubt, dann wird es von dem Filter 1 in Schritt 9 in Richtung des adressierten Teilnehmers weitergeleitet. Andernfalls wird das Paket 6 in Schritt 10 verworfen, d.h. es unterbleibt die Weiterleitung und das Paket 6 wird aus dem Puffer des Filters 1 gelöscht oder dort zum späteren Überschreiben mit einem anderen Paket freigegeben und verschwindet somit jedenfalls aus dem Verkehrsaufkommen des Kommunikationsnetzwerks.

Zur Auswertung der Portnummer in Schritt 8 kann in dem Filter 1 vorteilhaft mehr als nur eine Tabelle mit zulässigen Portnummern gespeichert sein. So kann eine erste Tabelle für die Übertragung vom gesicherten Netzwerkteil 2 zum ungesicherten Netzwerkteil 3 und eine zweite Tabelle für die umgekehrte Übertragungsrichtung vorgesehen sein, wobei die erste Tabelle mehr zulässige Portnummern enthält als die zweite, um zulässigen Fernwartungsapplikationen, die über ein Weitverkehrsnetzwerk (WAN) Zugang zum gesicherten Netzwerkteil 2 haben, einen Verbindungsaufbau zu einem potenziell unsicheren Teilnehmer 5 im ungesicherten Netzwerkteil 3 zu ermöglichen. Ein potenziell unsicherer Teilnehmer 5 kann jedoch selbst keine Verbindung in besagtes Weitverkehrsnetzwerk aufbauen, da die für diese Übertragungsrichtung gültige erste Tabelle hierfür keine zulässige Portnummer enthält.

Wenn es nicht erwünscht ist, Fernwartungsapplikationen jederzeit einen Verbindungsaufbau zu potenziell unsicheren Teilnehmern 5 zu erlauben, weil der dadurch entstehende Datenverkehr die reibungslose Funktion der Druckmaschine im Produktionsbetrieb gefährden könnte, kann ein zeitlich begrenzter Fernwartungszugang in unkritischen Zeiträumen, wie insbesondere in Stillstandsphasen der Druckmaschine, eröffnet werden, indem in dem Filter 1 mehrere verschiedene Tabellen zulässiger Portnummern vorgehalten werden. Zwischen diesen verschiedenen Tabellen wird dann von außen, d.h. durch einen von einer an dem gesicherten Netzwerkteil 2 angeschlossenen Steuereinheit an das Filter 1 gesendeten Befehl umgeschaltet. Auf diese Weise kann eine umfangreichere Tabelle mit zusätzlichen Portnummern für einen Fernwartungszugang gezielt dann aktiviert werden, wenn der durch die Fernwartung verursachte zusätzliche Datenverkehr nicht stört. Selbstverständlich können bei Bedarf auch mehr als zwei verschiedene Betriebsmodi mit verschiedenen Portnummerntabellen vorgesehen werden.

## Patentansprüche

1. Kommunikationsnetzwerk einer Druckmaschinensteuerung, mit einer Vielzahl von Netzwerk-Infrastrukturkomponenten und einer Vielzahl von als Teilnehmer angeschlossenen Steuereinheiten, die jeweils Maschineneinheiten der Druckmaschine zugeordnet sind und diese steuern, **dadurch gekennzeichnet, dass** mindestens ein Teilbereich (3) des Kommunikationsnetzwerks mit dem übrigen Teil (2) des Kommunikationsnetzwerks durch eine Filtereinheit (1) verbunden ist, die von den bei ihr eintreffenden Datenpaketen nur solche passieren lässt, welche in einem Adresssegment einen Abschnitt aufweisen, der mit einem Element einer vorbestimmten, in einem Speicher des Filters (1) gespeicherten Menge von zulässigen Adressen übereinstimmt, und alle anderen eintreffenden Datenpakete verwirft.

2. Kommunikationsnetzwerk nach Anspruch 1, **dadurch gekennzeichnet, dass** die in dem Filter (1) gespeicherten Adressen Portnummern sind, durch welche gemäß dem zum Betrieb des Kommunikationsnetzwerks eingesetzten Netzwerkprotokoll Datenpakete auf den Teilnehmen (4, 5) laufenden Prozessen zugeordnet werden, und dass unter den gespeicherten Portnummern keine bekannten Nummern von außerhalb der Druckmaschinensteuerung vorkommenden Standardprozessen sind.

3. Kommunikationsnetzwerk nach Anspruch 1 oder 2, **dadurch gekennzeichnet, dass** in der Filtereinheit (1) mindestens zwei unterschiedliche Mengen von zulässigen Adressen, die für unterschiedliche Richtungen der Übertragung durch die Filtereinheit (1) hindurch gelten, gespeichert sind.

4. Kommunikationsnetzwerk nach Anspruch 3, **dadurch gekennzeichnet, dass** zwei Übertragungsrichtungen durch die Filtereinheit (1) hindurch vorgesehen sind, und dass die Menge der für die Übertragung in einer der beiden Richtungen zulässigen Adressen sämtliche für die andere Richtung zulässigen Adressen und darüber hinaus eine vorbestimmte Anzahl zusätzlicher zulässiger Adressen umfasst.

5. Kommunikationsnetzwerk nach einem der Ansprüche 1 bis 4, **dadurch gekennzeichnet, dass** die Filtereinheit (1) mehrere Speicherbereiche für Adressen aufweist, in denen verschiedene Mengen von zulässigen Adressen gespeichert sind, und dass die Filtereinheit (1) zwischen mindestens zwei verschiedenen Betriebsarten, denen jeweils verschiedene Mengen von zulässigen Adressen zugeordnet sind, umschaltbar ist.
